# EUROPEAN PATENT APPLICATION

(11) **EP 3 534 026 A1**
(43) Date of publication of application: **04.09.2019**
(21) Application number: 19156747.8
(22) Date of filing: 12.02.2019
(51) Int. Cl.: F16C 41/04, F16C 43/04, F16C 43/06, F16C 19/26

(54) **BEARING INSTALLATION TOOL**

(30) Priority: 15.02.2018 US 201815897660
(71) Applicant: United Technologies Corporation, Farmington, CT 06032 (US)
(72) Inventor: AMADOR, Armando, Wethersfield, CT 06109 (US); GANTT, Michael, Granby, CT 06090 (US)
(74) Representative: Dehns

(57) **Abstract**

A cylindrical roller bearing installation tool (60) is provided. The cylindrical roller bearing has a plurality of rollers. The installation tool (60) includes a ring-shaped body (62) and a plurality of alignment projections (66). The ring-shaped body (62) has a circumference and an inner bore. The plurality of alignment projections (66) extend substantially axially outwardly from the body (62), and are distributed around the circumference of the ring-shaped body (62). Each alignment projection (66) has at least one roller engagement surface. Each of the alignment projections (66) is uniformly spaced around the circumference of the ring-shaped body (62).

## Description

### BACKGROUND OF THE INVENTION

### 1. Technical Field

This disclosure relates generally to cylindrical roller bearings, and to tools for installing cylindrical roller bearings in particular.

### 2. Background Information

Cylindrical roller bearings are commonly used to support loads between a dynamic member (e.g., a rotating shaft) and a static member (e.g., a housing), or between two dynamic members. Cylindrical roller bearings often include a plurality of rollers retained within a cage, an inner race, and an outer race. The inner race includes an inner diameter surface and an outer diameter bearing surface, and the outer race inner race includes an inner diameter bearing surface. The inner diameter surface of the inner race may be mounted (e.g., by a press fit) onto an outer diameter surface of the dynamic member. The cage is configured to maintain circumferential positioning of the rollers about a center axis. The rollers may have a variety of different geometric configurations (e.g., spherical, cylindrical, etc.) and the inner diameter surfaces of the inner and outer races are configured to mate with the roller bearings. In an assembled configuration, the rollers are positioned between and in contact with inner diameter bearing surfaces.

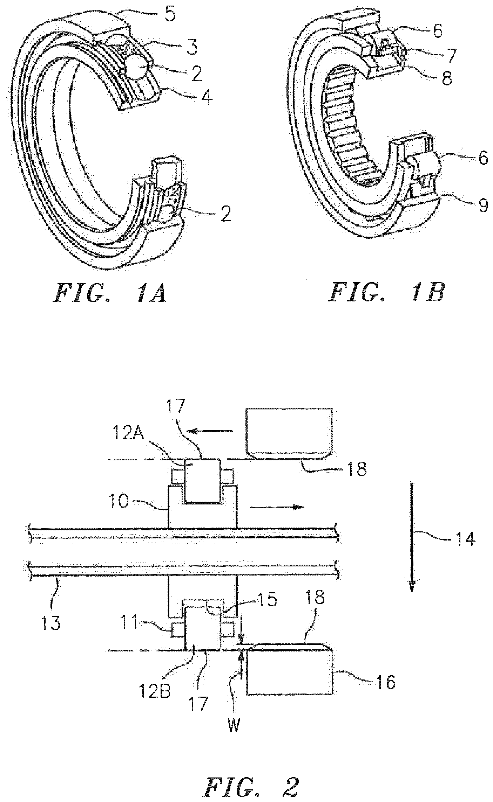

FIG. 1A shows a diagrammatic sectioned non-limiting example of a cylindrical roller bearing (shown in assembled form) having a plurality of spherical rollers 2, a cage 3, an inner race 4, and an outer race 5. FIG. 1B shows a diagrammatic sectioned non-limiting example of a cylindrical roller bearing (shown in assembled form) having a plurality of cylindrical rollers 6, a cage 7, an inner race 8, and an outer race 9. The roller elements 2, 6 may be circumferentially positioned and maintained by the cage 3, 7. The cage 3, 7 may be attached to either the inner race 4, 8 or the outer race 5, 9. The cage 3, 7 is typically configured to provide some amount of clearance between each respective roller and the cage; e.g., configured to allow radial movement of each roller. The amount of the aforesaid clearance is typically chosen for a variety reasons; e.g., so that no appreciable load is imparted onto the cage from the rollers during operation of the bearing, and to facilitate assembly of the bearing.

During the assembly of a device having a cylindrical roller bearing, the outer race may be initially mounted to a first member (e.g., a bearing support) and the inner race may be initially mounted to a second member (e.g., a rotating shaft), or vice versa. The cylindrical roller bearing may be "assembled" within the device by moving the inner race relative to the outer race, or the outer race relative to the inner race, or both, until the inner and outer races are aligned with one another and the rollers are disposed there between.

In some instances, the configuration of the cage and rollers (e.g., the relative clearance between the cage and each roller) may allow one or more of the rollers to "drop" relative to the cage due to gravity. FIG. 2 diagrammatically illustrates a roller bearing having an inner race 10, a cage 11, and rollers 12A, 12B mounted on a shaft 13, and a gravimetric force vector 14. The roller 12A disposed above the shaft 13 (i.e., the "upper roller") is shown in contact with the outer diameter bearing surface 15 of the inner race 10, and the roller 12B disposed below the shaft 13 (i.e., the "lower roller") is shown separated a distance from the outer diameter bearing surface 15 of the inner race 10; e.g., due to gravity displacing the lower roller 12B within the clearance between the cage 11 and the roller 12B. FIG. 2 also diagrammatically illustrates the outer race 16 disposed laterally relative to the inner race 10, and concentric with the shaft 13. As can be seen in FIG. 2, a contact surface 17 of the upper roller 12A is substantially aligned with the inner diameter bearing surface 18 of the outer race 16, and the contact surface 17 of the lower roller 12B is misaligned with the inner diameter bearing surface 18 of the outer race 16 by a distance "W". Consequently, assembly of the roller bearing in this state (e.g., by movement of the inner race, cage and rollers relative to the outer race) may result in potential interference contact between the lower roller and the outer race. The aforesaid contact can cause damage to the misaligned roller(s), or to the outer race, or both, during assembly. Even slight "witness marks" or other slight deformations of the roller contact surface and/or the race bearing surface can negatively affect the performance and/or useful life of the roller bearing; e.g., marks that lead to spalling and consequent bearing degradation and/or vibration. It should be noted that the misalignment between the lower roller(s) and the outer race diagrammatically shown in FIG. 2 is exaggerated for purposes of facilitating the explanation. Slight misalignments difficult to see with the naked eye can produce the issues described above.

The above described misalignment can be created by mechanisms other than race clearance or mechanisms in combination with race clearance. For example, an eccentrically shaped race may also cause or add to misalignment.

What is needed is an apparatus that facilitates the assembly of roller bearings.

### SUMMARY

According to an aspect of the present disclosure, a cylindrical roller bearing installation tool is provided. The cylindrical roller bearing has a plurality of rollers. The installation tool includes a ring-shaped body and a plurality of alignment projections. The ring-shaped body has a circumference and an inner radial surface. The plurality of alignment projections extend substantially axially outwardly from the body, and are distributed around the circumference of the ring-shaped body. Each of the plurality of alignment projections extends substantially axially out from the body in the same manner as the others of the plurality of alignment projections. Each alignment projection has a first roller engagement surface and a second roller engagement surface. The second roller engagement surface is spaced apart from the first roller engagement surface and disposed opposite the first roller engagement surface on the respective alignment projection. Each of the alignment projections is uniformly spaced around the circumference of the ring-shaped body.

According to another aspect of the present disclosure, a cylindrical roller bearing installation tool is provided. The cylindrical roller bearing has a plurality of rollers. The installation tool includes a ring-shaped body and a plurality of alignment projections. The ring-shaped body has a circumference and an inner bore. The plurality of alignment projections extend substantially axially outwardly from the body, and are distributed around the circumference of the ring-shaped body. Each alignment projection has at least one roller engagement surface. Each of the alignment projections is uniformly spaced around the circumference of the ring-shaped body.

According to any of the aspects of the present disclosure, or in any embodiments described herein, the first roller engagement surface and the second roller engagement surface of each said alignment projection may be disposed on circumferentially opposite sides of the respective alignment projection.

According to any of the aspects of the present disclosure, or in any embodiments described herein, the first engagement surface and the second engagement surface both may be configured to mate with cylindrical rollers.

According to any of the aspects of the present disclosure, or in any embodiments described herein, the first engagement surface and the second engagement surface both may be configured to mate with spherical rollers.

According to any of the aspects of the present disclosure, or in any embodiments described herein, the first engagement surface may be configured the same as the second engagement surface.

According to any of the aspects of the present disclosure, or in any embodiments described herein, the ring-shaped body may include an outer radial surface, a first axial end surface, and a second axial end surface. The inner radial surface is disposed radially inside of the outer radial surface. The first axial end surface extends between the inner radial surface and the outer radial surface, and the second axial end surface extends between the inner radial surface and the outer radial surface.

According to any of the aspects of the present disclosure, or in any embodiments described herein, the plurality of alignment projections may extend axially outwardly from the second axial end surface of the body.

According to any of the aspects of the present disclosure, or in any embodiments described herein, one or more alignment projections may have a lengthwise substantially constant cross-sectional geometry.

According to any of the aspects of the present disclosure, or in any embodiments described herein, one or more of the alignment projections has a variable lengthwise cross-sectional geometry.

According to any of the aspects of the present disclosure, or in any embodiments described herein, one or more of the alignment projections has a first lengthwise section having a first cross-sectional geometry, and a second lengthwise section having a second cross-sectional geometry, wherein the first cross-sectional geometry is different from the second cross-sectional geometry. In some embodiments, the first lengthwise section may have a first radial thickness, and the second lengthwise section may have a second radial thickness, wherein the second radial thickness is less than the first radial thickness. In some embodiments, the first lengthwise section may abut the body, and the section lengthwise section extends axially out from the first lengthwise section.

The present method and advantages associated therewith will become more readily apparent in view of the detailed description provided below, including the accompanying drawings.

### BRIEF DESCRIPTION OF THE DRAWINGS

FIG. 1A is a diagrammatic partially sectioned perspective view of a cylindrical roller bearing having spherical rollers.
FIG. 1B is a diagrammatic partially sectioned perspective view of a cylindrical roller bearing having cylindrical rollers.
FIG. 2 is a diagrammatic view of an unassembled cylindrical roller bearing.
FIG. 3 is a diagrammatic partially sectioned planar view of a gas turbine engine.
FIG. 4 is a diagrammatic perspective view of a bearing installation tool embodiment.
FIG. 5 is a front planar view of the bearing installation tool embodiment shown in FIG. 4.
FIG. 6 is a side planar view of the bearing installation tool embodiment shown in FIG. 4.
FIG. 7 is an enlarged partial diagrammatic perspective view of the bearing installation tool embodiment shown in FIG. 4, illustrating an alignment projection.
FIG. 8 is a diagrammatic perspective view of a bearing installation tool embodiment.
FIG. 9 is a front planar view of the bearing installation tool embodiment shown in FIG. 8.
FIG. 10 is an enlarged partial diagrammatic perspective view of the bearing installation tool embodiment shown in FIG. 8, illustrating an alignment projection.
FIG. 11 is an enlarged partial diagrammatic perspective view of the bearing installation tool embodiment shown in FIG. 8.
FIG. 12 is a partial perspective view of a cylindrical roller bearing having cylindrical rollers.
FIG. 13 is a partial perspective view of the cylindrical roller bearing shown in FIG. 12, engaged with a bearing installation tool embodiment.
FIG. 14 is a partial perspective view of the cylindrical roller bearing shown in FIG. 12, engaged with a bearing installation tool embodiment.
FIG. 15 is a diagrammatic view of an unassembled cylindrical roller bearing having spherical rollers with a bearing installation tool embodiment.

### DETAILED DESCRIPTION

It is noted that various connections are set forth between elements in the following description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

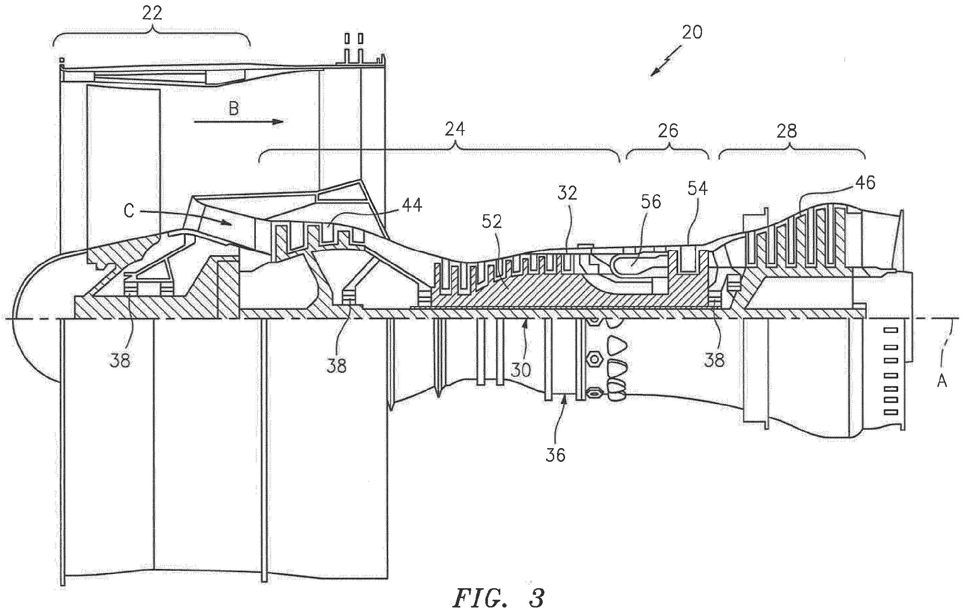

Referring now to the FIG. 3, to facilitate the description of the present disclosure a two-spool turbofan type gas turbine engine 20 is shown. This exemplary embodiment of a gas turbine engine includes a fan section 22, a compressor section 24, a combustor section 26, and a turbine section 28. The fan section 22 drives air along a bypass flow path B in a bypass duct, while the compressor section 24 drives air along a core flow path C for compression and communication into the combustor section 26 then expansion through the turbine section 28.

The exemplary gas turbine engine 20 shown in FIG. 3 includes a low speed spool 30 and a high speed spool 32 mounted for rotation about an engine central longitudinal axis A relative to an engine static structure 36. The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion.

A gas turbine engine such as that shown in FIG. 3 includes a plurality of cylindrical roller bears to facilitate motion between a static member and a dynamic member (or between two dynamic members). For example, FIG. 3 diagrammatically illustrates cylindrical roller bearings 38 disposed between the low speed spool 30 (e.g., dynamic member) and a respective bearing support (e.g., a static member).

The present disclosure is not limited to use with any particular type of cylindrical roller bearing and/or to any particular type of cylindrical roller bearing application; i.e., the present disclosure may be used with cylindrical roller bearings utilized in devices other than a gas turbine engine.

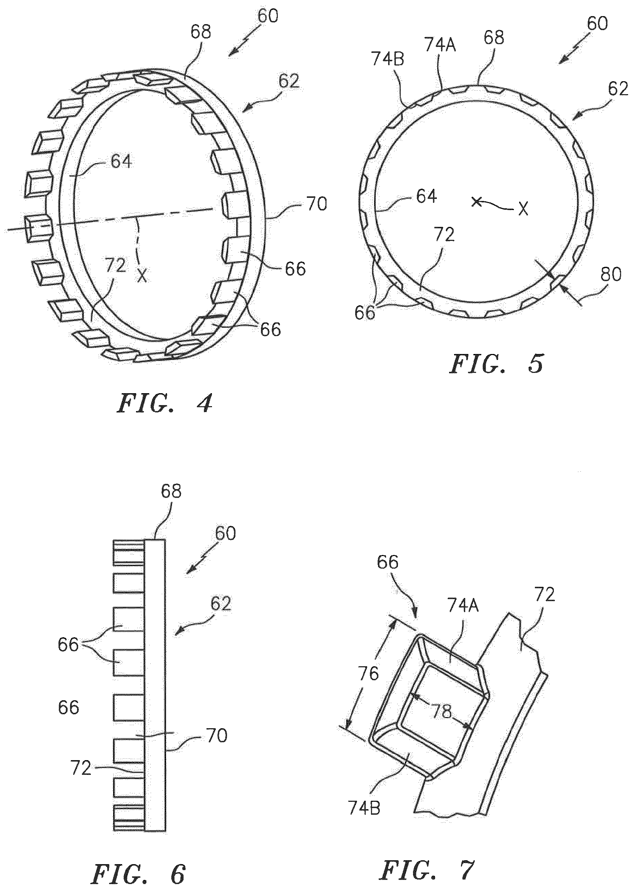

Referring to FIGS. 4-14, according to an aspect of the present disclosure, a bearing installation tool 60 is provided. Embodiments of the tool 60 are configured for use with different cylindrical roller bearings; e.g., cylindrical roller bearings having different numbers of rollers, different bearing diameters, different types of roller geometries, etc. For example, a first tool 60 embodiment may be configured for use with a cylindrical roller bearing having "N" number of rollers, where "N" is an integer greater than one, a second tool 60 embodiment may be configured for use with a cylindrical roller bearing having "M" number of rollers, where "M" is an integer greater than one and where "M" does not equal "N". Certain tool 60 embodiments may be configured for use with cylindrical roller bearings that include cylindrical rollers, other tool 60 embodiments may be configured for use with cylindrical roller bearings that include spherical rollers, etc. Certain tool 60 embodiments may be configured for use with cylindrical roller bearings having rollers disposed at a first diameter, other tool 60 embodiments may be configured for use with cylindrical roller bearings disposed at a second diameter, where the first diameter does not equal the second diameter, etc. The present disclosure bearing installation tool is not limited to any of these particular embodiments.

In all of these various tool 60 embodiments, the tool 60 has a ring-shaped body 62 having a circumference. The ring-shaped body 62 has a circumferentially extending inner radial surface 64 that defines an inner bore disposed at an inner diameter. As will be described below, a plurality of alignment projections 66 extend axially outwardly from the body 62. In some embodiments, as will be described herein, the tool body 62 may include an outer radial surface 68, a first axial end surface 70, and a second axial end surface 72.

The tool 60 may be made of any material (or combination of materials) that is sufficient to maintain the ring shape of the tool 60 during use, and therefore is not limited to any particular type of material. An example of an acceptable material is a tool steel. The tool 60 may be formed as a unitary structure, or may be formed as an assembly of a plurality of elements; e.g., the plurality of alignment projections 66 may be mechanically attached to the ring-shaped body 62, the tool 60 may be formed from a plurality of circumferential sections (e.g., hemispherical portions) that may be assembled to create the ring shape, etc.

The plurality of alignment projections 66 extend axially outwardly from the body 62. Each of the plurality of alignment projections 66 extends axially out from the body 62 in the same manner as the others of the plurality of alignment projections 66. Each of the alignment projections 66 may be described as having a width (extending circumferentially), a length (extending axially), and a thickness (extending radially).

In some embodiments, each alignment projection 66 has a first roller engagement surface 74A and a second roller engagement surface 74B. The second roller engagement surface 74B is spaced apart from the first roller engagement surface 74A and is disposed widthwise substantially opposite the first roller engagement surface 74A on the respective alignment projection 66. Each of the alignment projections 66 is uniformly spaced around the circumference of the ring-shaped body 62 relative to the other alignment projections 66. Each of the roller engagement surfaces 74A, 74B is configured to mate with any pair of the rollers of the bearing; e.g., if a cylindrical roller bearing has cylindrical rollers of a diameter "D", then the roller engagement surfaces 74A, 74B are configured to mate with cylindrical rollers having a diameter "D". As another example, if a cylindrical roller bearing has spherical rollers of a diameter "D", then the roller engagement surfaces 74A, 74B are configured to mate with spherical rollers having a diameter "D".

In some embodiments, one or more of the alignment projections may have a single roller engagement surface shaped to mate with the geometry of the rollers within the bearing; e.g., cylindrical rollers, spherical rollers, etc. In these embodiments, each alignment projection having a single engagement surface may be configured to locate one of the rollers within the cylindrical roller bearing.

Embodiments of the tool 60 are configured so that at least a portion of each alignment projection 66 is at least partially receivable between adjacent rollers of a cylindrical roller bearing, and is engageable with each of the aforesaid adjacent rollers. The engagement of adjacent pairs of rollers by each respective alignment projection 66 collectively positions the rollers within the roller bearing in a predetermined geometry. In the predetermined geometry, the rollers are uniformly spaced around the circumference of the roller bearing and held in a circular configuration; e.g., a non-eccentric configuration that conforms to the circularity of the assembled roller bearing.

As indicated above, embodiments of the present tool 60 may be configured for use with a variety of different types of cylindrical roller bearings. To illustrate the utility of the present tool 60, examples are provided hereinafter. The present disclosure is not limited to these particular examples.

A first exemplary embodiment of the present bearing installation tool 60 is shown in FIGS. 4-7. This tool 60 embodiment includes a ring-shaped body 62 having a circumference (extending around a center axis X), an outer radial surface 68, a first axial end surface 70, a second axial end surface 72, and a plurality of alignment projections 66. The inner radial surface 64 is disposed radially inside of the outer radial surface 68. The body 62 is typically configured to have an inner diameter that permits a slide fit between the body 62 and the outer diameter surface of the shaft upon which a bearing inner race is mounted; i.e., the bearing with which the installation tool 60 is being used for installation. In this embodiment, the first axial end surface 70 extends between the inner radial surface 64 and the outer radial surface 68; e.g., within a plane that is perpendicular to the inner and outer radial surfaces 64, 68. The present disclosure is not, however, limited to a tool 60 having a first axial end surface 70 that extends between the inner radial surface 64 and the outer radial surface 68, and/or one with a first axial end surface 70 that lies within a plane that is perpendicular to the inner and outer radial surfaces 64, 68. In this embodiment, the second axial end surface 72 extends between the inner radial surface 64 and the outer radial surface 68. The present disclosure is not, however, limited to a tool 60 having a second axial end surface 72 that extends between the inner radial surface 64 and the outer radial surface 68.

As indicated above, the plurality of alignment projections 66 extend axially outwardly from the body 62, each extending axially out from the body 62 in the same manner as the others of the plurality of alignment projections 66. In the exemplary embodiment shown in FIGS. 4-7, each of the alignment projections 66 extends axially outwardly from the second axial end surface 72. The present disclosure is not, however, limited to alignment projections 66 that extend axially outwardly from a second axial end surface 72. Each of the alignment projections 66 may be described as having a width 76 (extending circumferentially), a length 78 (extending axially), and a thickness 80 (extending radially); e.g., see FIGS. 5 and 7. Each alignment projection 66 has a first roller engagement surface 74A and a second roller engagement surface 74B. The second roller engagement surface 74B is widthwise spaced apart from the first roller engagement surface 74A and is disposed widthwise substantially opposite the first roller engagement surface 74A on the respective alignment projection 66. Each of the alignment projections 66 is uniformly spaced around the circumference of the ring-shaped body 62 relative to the other alignment projections 66. In some embodiments, one or more of the alignment projections 66 may have a lengthwise substantially constant cross-sectional geometry; i.e., sectional slices of an alignment projection 66 at different lengthwise positions have substantially the same cross-sectional geometry. In some embodiments, one or more of the alignment projections 66 may have a lengthwise cross-sectional geometry that varies; e.g., sectional slices of an alignment projection 66 at different lengthwise positions have different cross-sectional geometries.

In the exemplary embodiment shown in FIGS. 4-7, the alignment projections 66 are configured for use with a cylindrical roller bearing having cylindrical rollers (e.g., each having a diameter "D"). The first roller engagement surface 74A is configured to mate with one of the rollers, and the second roller engagement surface 74B is configured to mate with another of the rollers; e.g., the first and second roller engagement surfaces 74A, 74B are each configured to have a diameter "D1" that mates with the roller diameter "D" of respective adjacent rollers with a clearance fit. The installation tool 60 is configured for use with a cylindrical roller bearing having "N" number of rollers. Hence, the installation tool 60 has a number of alignment projections 66 that collectively form "N" number of spaces, each space between adjacent alignment projections 66, to permit one of the "N" number of rollers to be received between adjacent alignment projections 66. In the embodiment shown in FIGS. 4-7, all of the alignment projections 66 have a lengthwise substantially constant cross-sectional geometry.

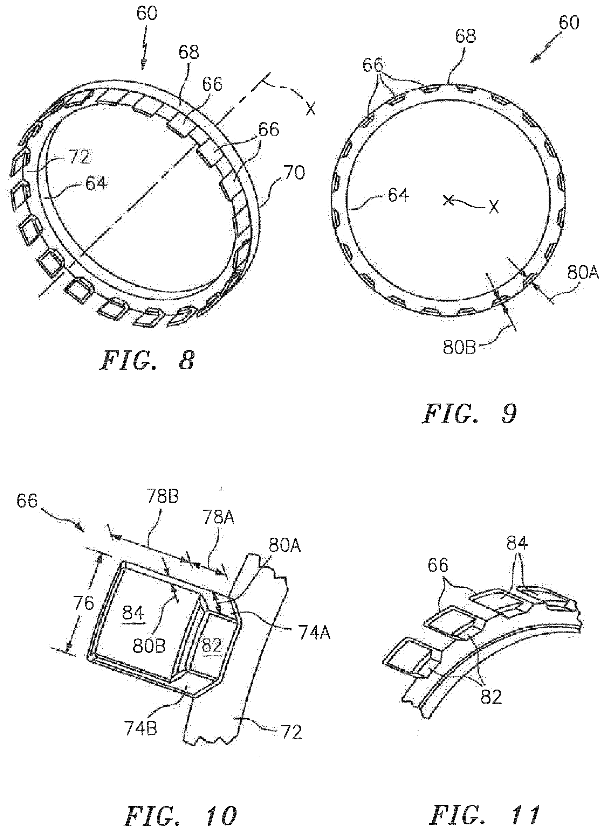

A second exemplary embodiment of the present bearing installation tool 60 is shown in FIGS. 8-11. This tool 60 embodiment includes a ring-shaped body 62 having a circumference (extending around a center axis), an inner radial surface 64, an outer radial surface 68, a first axial end surface 70, a second axial end surface 72, and a plurality of alignment projections 66. The inner radial surface 64 is disposed radially inside of the outer radial surface 68. The body 62 is typically configured to have an inner diameter that permits a slide fit between the inner radial surface 64 and the outer diameter surface of the shaft upon which a bearing inner race is mounted; i.e., the bearing with which the installation tool 60 is being used for installation. In this embodiment, the first axial end surface 70 extends between the inner radial surface 64 and the outer radial surface 68; e.g., within a plane that is perpendicular to the inner and outer radial surfaces 64, 68. As indicated above, however, the present disclosure is not limited to a tool 60 having a first axial end surface 70 that extends between the inner radial surface 64 and the outer radial surface 68, and/or one with a first axial end surface 70 that lies within a plane that is perpendicular to the inner and outer radial surfaces 64, 68. In this embodiment, the second axial end surface 72 extends between the inner radial surface 64 and the outer radial surface 68. Here again, the present disclosure is not limited to a tool 60 having a second axial end surface 72 that extends between the inner radial surface 64 and the outer radial surface 68.

In the exemplary embodiment shown in FIGS. 8-11, each of the alignment projections 66 extends axially outwardly from the second axial end surface 72. The present disclosure is not, however, limited to alignment projections 66 that extend axially outwardly from a second axial end surface 72. Each of the alignment projections 66 may be described as having a width 76 (extending circumferentially), a length 78A, 78B (extending axially), and a thickness 80A, 80B (extending radially). In this embodiment, however, the alignment projections 66 do not have a lengthwise uniform cross-sectional geometry. Each alignment projection 66 has a first lengthwise section 82 (abutting the body 62) and a second lengthwise section 84 (extending axially out from the first lengthwise section 82), wherein the first and second lengthwise sections 82, 84 have dissimilar cross-sectional geometries (i.e., an example of a variable geometry). The first lengthwise section 82 has a first radial thickness 80A and a first axial length 78A, and the second lengthwise section 84 has a second radial thickness 80B and a second axial length 78B. The second radial thickness 80B is less than the first radial thickness 80A; e.g., see FIGS. 9 and 10. The second lengthwise section 78B of each alignment projection may provide additional alignment engagement (e.g., for cylindrical rollers), facilitate initial alignment of the tool 60 relative to the bearing, and provide clearance for bearing cage elements (e.g., bearing cage elements disposed axially inboard of the cylindrical roller bearing). Each alignment projection 66 has a first roller engagement surface 74A and a second roller engagement surface 74B. The second roller engagement surface 74B is widthwise spaced apart from the first roller engagement surface 74A and is disposed widthwise substantially opposite the first roller engagement surface 74A on the respective alignment projection 66. Each of the alignment projections 66 is uniformly spaced around the circumference of the ring-shaped body 62.

In the exemplary embodiment shown in FIGS. 8-11, the alignment projections 66 are configured for use with a cylindrical roller bearing having cylindrical rollers (e.g., each having a diameter "D"). The first roller engagement surface 74A is configured to mate with one of the rollers, and the second roller engagement surface 74B is configured to mate with another of the rollers; e.g., the first and second roller engagement surfaces 74A, 74B are each configured to have a diameter "D1" that mates with the roller diameter "D" of respective adjacent rollers with a clearance fit. The installation tool 60 is configured for use with a cylindrical roller bearing having "N" number of rollers. Hence, the installation tool 60 has a number of alignment projections 66 that collectively form "N" number of spaces, each space between adjacent alignment projections 66 to permit one of each of the "N" number of rollers to be received between adjacent alignment projections 66.

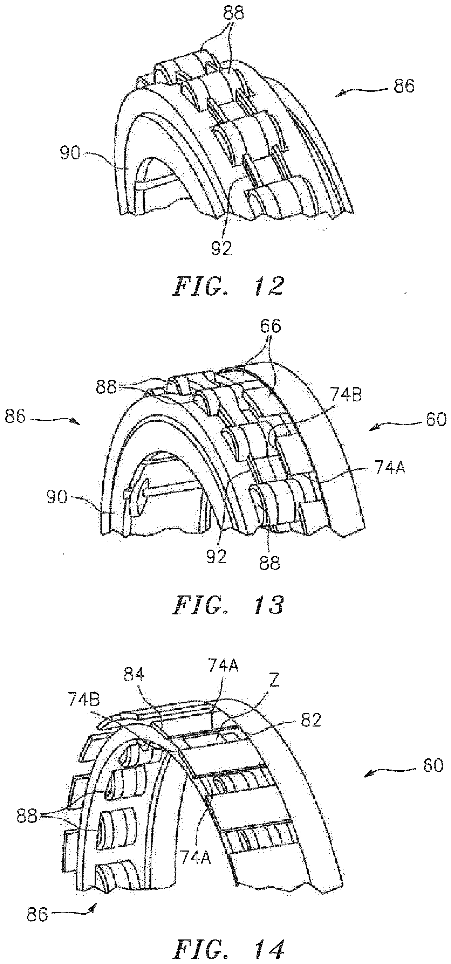

FIGS. 12-14 provide an example of how the present installation tool 60 may be engaged with a cylindrical roller bearing. FIG. 12 is a partial perspective view of a cylindrical roller bearing 86 having cylindrical rollers 88. In FIG. 12, only a portion of the bearing 86 is shown to facilitate the explanation of the engagement between the present installation tool 60 and the bearing 86; e.g., the bearing 86 is shown having an inner race 90, a cage 92, and a plurality of rollers 88 - no outer race is shown.

In FIG. 13, an embodiment of the installation tool 60 (e.g., an embodiment similar to that shown in FIGS. 4-7) is shown engaged with the cylindrical roller bearing 86 shown in FIG. 12. As can be seen from FIG. 13, each of the alignment projections 66 is shown disposed between a pair of adjacent rollers 88. The first roller engagement surface 74A of a respective alignment projection 66 is engaged with one of the rollers 88, and the second roller engagement surface 74B of the same alignment projection 66 is engaged with another of the rollers 88. The engagement of adjacent pairs of rollers 88 by each respective alignment projection 66 collectively positions the rollers 88 within the cylindrical roller bearing 86 in a predetermined geometry. In the predetermined geometry, the rollers 88 are uniformly spaced around the circumference of the cylindrical roller bearing 86 and are held in a circular configuration; e.g., a non-eccentric configuration that conforms to the circularity of the assembled cylindrical roller bearing 86.

In FIG. 14, an embodiment of the installation tool 60 (e.g., an embodiment similar to that shown in FIGS. 8-11) is shown engaged with the cylindrical roller bearing 86 shown in FIG. 12. As can be seen from FIG. 14, each of the alignment projections 66 is shown disposed between a pair of adjacent rollers 88. Each of the alignment projections 66 of this installation tool 60 embodiment includes a first lengthwise section 82 and a second lengthwise section 84 as described above. As can be seen from FIG. 14, the second lengthwise section 84 of each alignment projection 66 provides additional alignment engagement (e.g., for the cylindrical rollers) and provides clearance for bearing cage elements (e.g., bearing cage elements disposed axially inboard of the cylindrical roller bearing). It should be noted that a roller that would be otherwise positioned at "Z" is shown removed to facilitate the illustration of the engagement of the tool 60 with the bearing 86. The first roller engagement surface 74A of a respective alignment projection 66 is engaged with one of the rollers 88, and the second roller engagement surface 74B of the same alignment projection 66 is engaged with another of the rollers 88. The engagement of adjacent pairs of rollers 88 by each respective alignment projection 66 collectively positions the rollers 88 within the cylindrical roller bearing 86 in a predetermined geometry. In the predetermined geometry, the rollers 88 are uniformly spaced around the circumference of the cylindrical roller bearing 86 and are held in a circular configuration; e.g., a non-eccentric configuration that conforms to the circularity of the assembled cylindrical roller bearing 86.

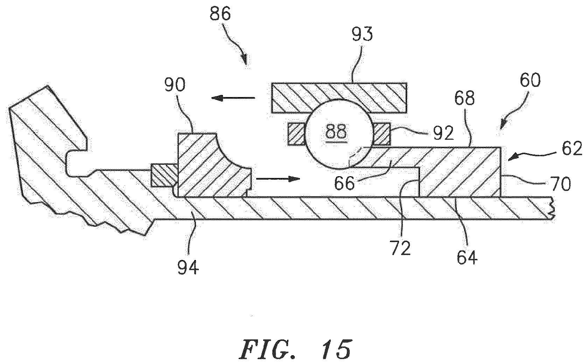

A third exemplary embodiment of the present bearing installation tool 60 is shown in FIG. 15, diagrammatically illustrating the tool 60 being used to assemble a cylindrical roller bearing 86 having a portion of an inner race 90 mounted on a shaft 94, spherical rollers 88, an outer race 93, and a cage 92. This tool 60 embodiment is similar to those described above in the first and second exemplary examples (e.g., ring-shaped body 62, an outer radial surface 68, a first axial end surface 70, a second axial end surface 72, a plurality of alignment projections 66, etc.). In this exemplary embodiment, the plurality of alignment projections 66 extend axially outwardly from the body 62 in a similar manner as described above. Each alignment projection 66 is also similar to those described above (e.g., having a circumferentially extending width, an axially extending length, a radially extending thickness, a first roller engagement surface, and a second roller engagement surface. In this embodiment, the alignment projections 66 are configured for use with a cylindrical roller bearing having spherical rollers 88 (e.g., each having a diameter "D"). The first roller engagement surface is configured to mate with one of the spherical rollers, and the second roller engagement surface is configured to mate with another of the spherical rollers, in the manner described above.

While various embodiments of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these features may be described individually, it is within the scope of the present disclosure that some or all of these features may be combined with any one of the aspects and remain within the scope of the present disclosure. Accordingly, the present disclosure is not to be restricted except in light of the attached claims and their equivalents.

## Claims

1. A cylindrical roller bearing installation tool (60) for a cylindrical roller bearing (86) having a plurality of rollers (2;6;88), the tool (60) comprising:
a ring-shaped body (62) having a circumference and an inner radial surface (64); and
a plurality of alignment projections (66) extending substantially axially outwardly from the body (62), and distributed around the circumference of the ring-shaped body (62), wherein each of the plurality of alignment projections (66) extends substantially axially out from the body (62) in the same manner as the others of the plurality of alignment projections (66);
wherein each of the plurality of alignment projections (66) has a first roller engagement surface (74A) and a second roller engagement surface (74B), the second roller engagement surface (74B) spaced apart from the first roller engagement surface (74A) and disposed opposite the first roller engagement surface (74A) on the respective alignment projection (66); and
wherein each of the plurality of alignment projections (66) is uniformly spaced around the circumference of the ring-shaped body (62).

2. The installation tool (60) of claim 1, wherein the first roller engagement surface (74A) and the second roller engagement surface (74B) of each of the plurality of alignment projections (66) are disposed on circumferentially opposite sides of the respective alignment projection (66).

3. The installation tool (60) of claim 1 or 2, wherein the first engagement surface (74A) is configured the same as the second engagement surface (74B).

4. The installation tool (60) of any preceding claim, wherein the first engagement surface (74A) and the second engagement surface (74B) are both configured to mate with cylindrically shaped rollers (6;88).

5. The installation tool (60) of claims 1 to 3, wherein the first engagement surface (74A) and the second engagement surface (74B) are both configured to mate with spherically shaped rollers (2).

6. The installation tool (60) of any preceding claim, wherein the ring-shaped body (62) includes an outer radial surface (68), a first axial end surface (70), and a second axial end surface (72);
the inner radial surface (64) is disposed radially inside of the outer radial surface (68), and the first axial end surface (70) extends between the inner radial surface (64) and the outer radial surface (68), and the second axial end surface (72) extends between the inner radial surface (64) and the outer radial surface (68).

7. The installation tool (60) of claim 6, wherein the plurality of alignment projections (66) extend axially outwardly from the second axial end surface (72) of the body (62).

8. The installation tool (60) of any preceding claim, wherein each of the plurality of alignment projections (66) has a first lengthwise section (82) having a first cross-sectional geometry, and a second lengthwise section (84) having a second cross-sectional geometry, wherein the first cross-sectional geometry is different from the second cross-sectional geometry.

9. The installation tool (60) of claim 8, wherein the first lengthwise section (82) has a first radial thickness (80A), and the second lengthwise section (84) has a second radial thickness (80B), and the second radial thickness (80B) is less than the first radial thickness (80A).

10. The installation tool (60) of claim 8 or 9, wherein the first lengthwise section (82) abuts the body (62), and the second lengthwise section (84) extends axially out from the first lengthwise section (82).

11. A cylindrical roller bearing installation tool (60) for a cylindrical roller bearing (86) having a plurality of rollers (2;6;88), the tool (60) comprising:
a ring-shaped body (62) having a circumference and an inner bore; and
a plurality of alignment projections (66) extending substantially axially outwardly from the body (62), and distributed around the circumference of the ring-shaped body (62);
wherein each of the plurality of alignment projections (66) has at least one roller engagement surface (74A;74B); and
wherein each of the plurality of alignment projections (66) is uniformly spaced around the circumference of the ring-shaped body (62).

12. The installation tool (60) of claim 11, wherein the at least one engagement surface (74A;74B) is configured to mate with a cylindrically shaped roller (6;88), or with a spherically shaped roller (2).

13. The installation tool (60) of claim 11 or 12, wherein the ring-shaped body (62) includes an outer radial surface (68), a first axial end surface (70), and a second axial end surface (72);
wherein the plurality of alignment projections (66) extend axially outwardly from the second axial end surface (72) of the body (62).

14. The installation tool (60) of claim 1 to 7 or 11 to 13, wherein each of the plurality of alignment projections (66) has a lengthwise substantially constant cross-sectional geometry.

15. The installation tool (60) of any of claims 11 to 13, wherein each of the plurality of alignment projections (66) has a variable lengthwise cross-sectional geometry.
